(19) Europäisches Patentamt
European Patent Office
Office européen des brevets

(11) **EP 4 693 954 A1**

(12) **EUROPEAN PATENT APPLICATION**
published in accordance with Art. 153(4) EPC

(43) Date of publication:
**11.02.2026 Bulletin 2026/07**

(21) Application number: **23930423.1**

(22) Date of filing: **29.03.2023**

(51) International Patent Classification (IPC):
***H04B 10/61*** *(2013.01)*

(52) Cooperative Patent Classification (CPC):
**H04B 10/61**

(86) International application number:
**PCT/JP2023/012815**

(87) International publication number:
**WO 2024/201784 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **NTT, Inc.**
**Tokyo 100-8116 (JP)**

(72) Inventors:
• **YAMAZAKI Etsushi**
**Musashino-shi, Tokyo 180-8585 (JP)**
• **MINOGUCHI Kyo**
**Musashino-shi, Tokyo 180-8585 (JP)**

• **NAKAMURA Masanori**
**Musashino-shi, Tokyo 180-8585 (JP)**
• **HAMAOKA Fukutaro**
**Musashino-shi, Tokyo 180-8585 (JP)**
• **KISAKA Yoshiaki**
**Musashino-shi, Tokyo 180-8585 (JP)**
• **HORIKOSHI Kengo**
**Musashino-shi, Tokyo 180-8585 (JP)**
• **SAITO Kohei**
**Musashino-shi, Tokyo 180-8585 (JP)**

(74) Representative: **Santarelli**
**Tour Trinity**
**1 bis Place de la Défense**
**92400 Courbevoie (FR)**

(54) **SIGNAL PROCESSING DEVICE AND SIGNAL PROCESSING METHOD**

(57)  Provided is a signal processing device including: a finite impulse response (FIR) filter in which a sampling frequency of an input signal input from an outside is at a ratio of less than two samples per symbol or at a ratio which is not capable of being represented by an integer, and the sampling frequency of an output signal is one sample per symbol, the FIR filter classifying each symbol into any of a plurality of sequences according to a positional relationship of sampling points of the input signal with respect to the output signal, and executing adaptive equalization processing on a digital signal corresponding to an optical signal received via an optical transmission line on the basis of filter coefficients different for each sequence; and a coefficient update unit that updates the filter coefficients of a reference sequence by using a gradient vector obtained from a known signal or a data signal to set the updated filter coefficients in the FIR filter, and generates filter coefficients of a sequence other than the reference sequence by performing an operation on a square matrix different for each sequence for the filter coefficients of the reference sequence to set the generated filter coefficients in the FIR filter.

Fig. 3

**Description**

Technical Field

The present invention relates to a signal processing device and a signal processing method.

Background Art

The state of polarization and polarization mode dispersion in an optical signal transmitted through an optical transmission line varies depending on conditions such as temperature and vibration of an optical fiber. Therefore, in digital coherent optical transmission, an adaptive equalizer included in a signal processing device on a reception side performs polarization separation and polarization mode dispersion (PMD) compensation on an optical signal transmitted through the optical transmission line.

From the viewpoint of miniaturization and integration of a signal processing device, it is required to reduce power consumption of a digital signal processor (DSP) which is an element essential for digital coherent optical transmission. In the DSP, the power consumption of the adaptive equalizer may occupy about 20% or more of the power consumption of the entire DSP. Here, as the number of taps of a finite impulse response (FIR) filter included in the adaptive equalizer decreases, the power consumption of the adaptive equalizer decreases.

Since the FIR filter performs polarization separation, it is necessary to separate two polarizations in the case of single mode fiber transmission. Therefore, a 2×2 complex filter arrangement is generally employed. Therefore, the power consumption per one tap is 16 times larger than that of a 1×1 real-number filter. Accordingly, in a configuration for low power consumption, it is important to reduce the number of required taps.

The polarization mode dispersion compensation amount can be used as a factor for determining the number of required taps. As the time spread due to the polarization mode dispersion and distortion is larger, a larger number of taps are required. Therefore, by increasing the time corresponding to one tap, the number of taps can be reduced while maintaining the tolerance of polarization mode dispersion. There is a case where fractional sampling is used such that 1.25 sample points per symbol are obtained from two samples per symbol of a sampling signal. In an analog-to-digital converter that performs sampling, power can be reduced by lowering the sampling frequency. A higher baud rate can be achieved by reducing the number of samples per symbol. Also from these viewpoints, the fractional sampling is often used.

When the fractional sampling signal can be input to the FIR filter, the resampling processing can be omitted, and thus the power consumption can be reduced. As described above, the fractional sampling has advantages in terms of both power and performance.

Citation List

Patent Literature

Patent Literature 1: WO 2021/053706 A

Summary of Invention

Technical Problem

However, in the fractional sampling, there is a problem that the updatable tap coefficient sequence changes depending on the known signal position, or the frequency of coefficient update decreases and the response speed to disturbance decreases in a state where the updatable tap coefficient is limited.

In view of the above circumstances, an object of the present invention is to provide a technology capable of performing high-speed FIR filter control while suppressing the power consumption.

Solution to Problem

According to an aspect of the present invention, there is provided a signal processing device including: a finite impulse response (FIR) filter in which a sampling frequency of an input signal input from an outside is at a ratio of less than two samples per symbol or at a ratio which is not capable of being represented by an integer, and the sampling frequency of an output signal is one sample per symbol, the FIR filter classifying each symbol into any of a plurality of sequences according to a positional relationship of sampling points of the input signal with respect to the output signal, and executing adaptive equalization processing on a digital signal corresponding to an optical signal received via an optical transmission line on the basis of filter coefficients different for each sequence; and a coefficient update unit that updates the filter coefficients of a reference sequence by using a gradient vector obtained from a known signal or a data signal to set the updated filter coefficients in the FIR filter, and generates filter coefficients of a sequence other than the reference sequence by performing an operation on a square matrix different for each sequence for the filter coefficients of the reference sequence to set the generated filter coefficients in the FIR filter.

According to another aspect of the present invention, there is provided a signal processing method executed by a signal processing device, the method including: by a finite impulse response (FIR) filter in which a sampling frequency of an input signal input from an outside is at a ratio of less than two samples per symbol or at a ratio which is not capable of being represented by an integer, and the sampling frequency of an output signal is one sample per symbol, classifying each symbol into any of a plurality of sequences according to a positional relationship of sampling points of the input signal with respect to the output signal, and executing adaptive equalization processing on a digital signal corresponding to an optical signal received via an optical transmission line on the basis of filter coefficients different for each sequence; and updating the filter coefficients of a reference sequence by using a gradient vector obtained from a known signal or a data signal to set the updated filter coefficients in the FIR filter, and generating filter coefficients of a sequence other than the reference sequence by performing an operation on a square matrix different for each sequence for the filter coefficients of the reference sequence to set the generated filter coefficients in the FIR filter.

Advantageous Effects of Invention

According to the present invention, it is possible to perform high-speed FIR filter control while suppressing power consumption.

Brief Description of Drawings

[Fig. 1] A diagram illustrating a configuration example of an optical transmission/reception device according to a first embodiment.
[Fig. 2] A diagram illustrating a configuration example of an adaptive equalization unit according to the first embodiment.
[Fig. 3] A diagram illustrating a configuration example of a coefficient update unit according to the first embodiment.
[Fig. 4] A diagram illustrating a configuration example of an FIR filter according to the first embodiment.
[Fig. 5] A diagram for describing effects of the present invention.
[Fig. 6] A diagram illustrating a configuration example of a coefficient update unit according to a second embodiment.

Description of Embodiments

Hereinafter, embodiments of the present invention will be described with reference to the drawings.

(First embodiment)

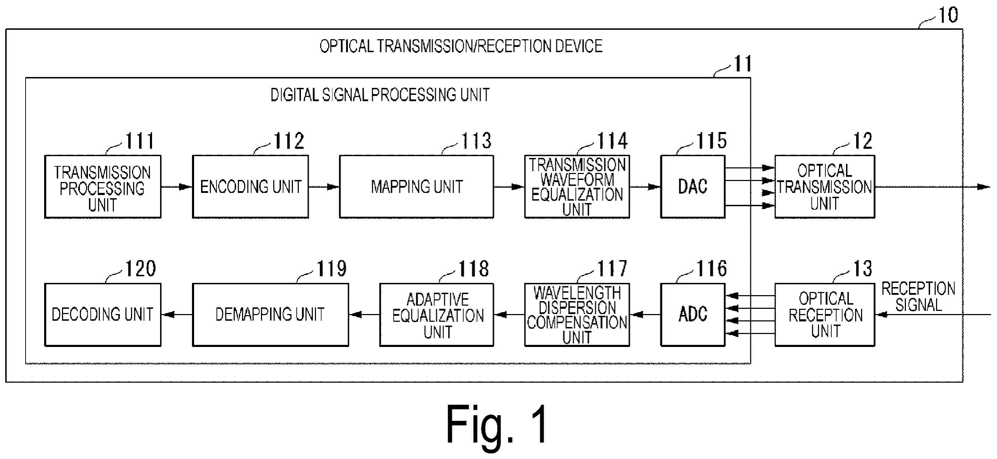

Fig. 1 is a diagram illustrating a configuration example of an optical transmission/reception device 10 according to a first embodiment. The optical transmission/reception device 10 is a device that performs transmission and reception of an optical signal in digital coherent optical transmission. The optical transmission/reception device 10 is connected to another optical transmission/reception device 10 via an optical transmission line. The optical transmission/reception device 10 includes a digital signal processing unit 11, an optical transmission unit 12, and an optical reception unit 13. The digital signal processing unit 11 includes a transmission processing unit 111, an encoding unit 112, a mapping unit 113, a transmission waveform equalization unit 114, a DAC 115, an ADC 116, a wavelength dispersion compensation unit 117, an adaptive equalization unit 118, a demapping unit 119, and a decoding unit 120. The digital signal processing unit 11 is an aspect of a signal processing device.

The optical transmission unit 12 generates an optical signal by modulating light using transmission target data subjected to signal processing by the digital signal processing unit 11. The optical transmission unit 12 transmits the generated optical signal to the outside.

The optical reception unit 13 causes locally-emitted light to interfere with an optical signal input from the outside (hereinafter referred to as "reception signal"), and converts the reception signal into a baseband analog electric signal. Here, the optical reception unit 13 acquires analog electric signals "$x_i$" and "$x_q$" according to X polarization of the received optical signal and analog electric signals "$y_i$" and "$y_q$" according to Y polarization of the received optical signal.

Some or all of the functional units of the digital signal processing unit 11 are implemented as software by a processor such as a central processing unit (CPU) executing a program deployed from a storage device which is a nonvolatile recording medium (non-transitory recording medium) to a memory. The program may be recorded in a computer-readable recording medium. The computer-readable recording medium is, for example, a portable medium such as a flexible disk, a magneto-optical disk, a read only memory (ROM), or a compact disk read only memory (CD-ROM), or a non-transitory recording medium such as a storage device such as a hard disk built in a computer system. The program may be transmitted via an electrical communication line.

Some or all of the functional units of the digital signal processing unit 11 may be implemented by using, for example, hardware including an electronic circuit (or a circuitry) using a large scale integration circuit (LSI), an application specific integrated circuit (ASIC), a programmable logic device (PLD), a field programmable gate array (FPGA), or the like.

The transmission processing unit 111, the encoding unit 112, the mapping unit 113, the transmission waveform equalization unit 114, and the DAC 115 execute the transmission-side processing in digital coherent optical transmission. The transmission processing unit 111 generates a bit string of data to be transmitted. The encoding unit 112 acquires a transmission signal by performing forward error correction (FEC) encoding processing on a bit string of data to be transmitted. The encoding unit 112 outputs the obtained transmission signal to the mapping unit 113.

The mapping unit 113 maps the transmission signal output from the encoding unit 112 to a symbol. The transmission waveform equalization unit 114 compensates for waveform distortion of the transmission signal mapped to the symbol. The transmission waveform equalization unit 114 outputs the transmission signal whose waveform distortion is compensated to the DAC 115. The DAC 115 converts the transmission signal output from the transmission waveform equalization unit 114 from a digital signal to an analog signal. The DAC 115 outputs the analog signal to the optical transmission unit 12.

The ADC 116, the wavelength dispersion compensation unit 117, the adaptive equalization unit 118, the demapping unit 119, and the decoding unit 120 execute reception-side processing in the digital coherent optical transmission. The ADC 116 converts the analog electric signals "$x_i$", "$x_q$", "$y_i$", and "$y_q$" output from the optical reception unit 13 into digital electric signals "$x_i$", "$x_q$", "$y_i$", and "$y_q$", respectively.

The wavelength dispersion compensation unit 117 executes processing of compensating for wavelength dispersion generated in a waveform of an optical signal in an optical fiber (transmission line) on the digital electric signals "$x_i$", "$x_q$", "$y_i$", and "$y_q$" converted by the ADC 116. The wavelength dispersion compensation unit 117 outputs, to the adaptive equalization unit 118, the digital electric signals "$x_i$" and "$x_q$" corresponding to X polarization of the optical signal whose wavelength dispersion is compensated, and the digital electric signals "$y_i$" and "$y_q$" corresponding to Y polarization of the optical signal whose wavelength dispersion is compensated.

The adaptive equalization unit 118 executes an adaptive equalization processing on the digital electric signals "$x_i$" and "$x_q$" corresponding to the X polarization and the digital electric signals "$y_i$" and "$y_q$" corresponding to the Y polarization according to the tap coefficients set for a plurality of taps of the FIR filter. The adaptive equalization unit 118 outputs, to the demapping unit 119, the digital electric signal corresponding to the X polarization on which the adaptive equalization processing is executed and the digital electric signal corresponding to the Y polarization on which the adaptive equalization processing is executed.

The demapping unit 119 converts the digital electric signal corresponding to the X polarization on which the adaptive equalization unit 118 executes the adaptive equalization processing and symbol information of the digital electric signal corresponding to the Y polarization on which the adaptive equalization processing is executed into a bit sequence.

The decoding unit 120 corrects a code error generated in the optical signal due to intercode interference (intersymbol interference) in the optical fiber with respect to the bit sequence output from the demapping unit 119.

The decoding unit 120 decodes the bit sequence in which the code error is corrected.

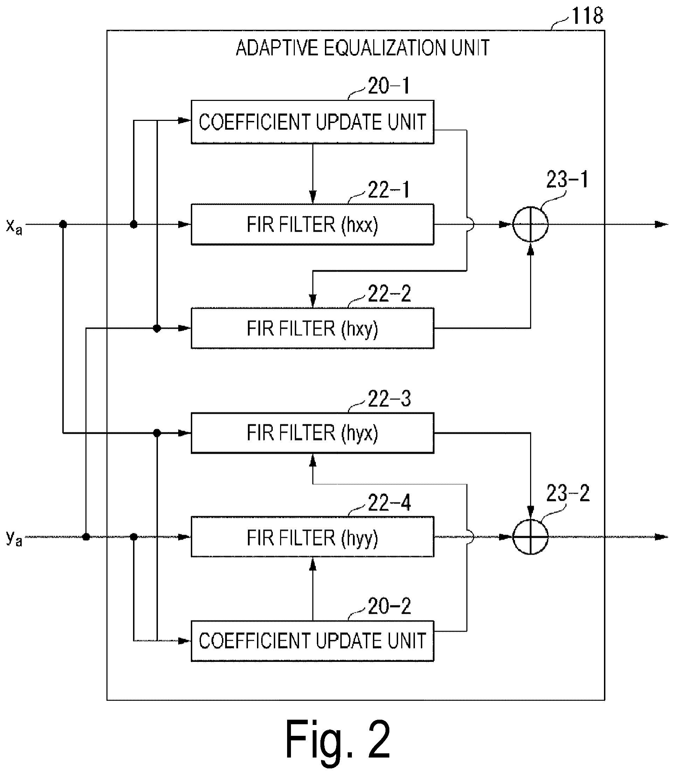

Next, the adaptive equalization unit 118 will be described in detail. Fig. 2 is a diagram illustrating a configuration example of the adaptive equalization unit 118 according to the first embodiment. In general, the adaptive equalization unit 118 includes four complex filters or 16 real-number filters. Moreover, there is also a configuration using a large number of filters, and the configuration of the present patent is applicable. In Fig. 2, the adaptive equalization unit 118 includes coefficient update units 20-1 to 20-2, FIR filters 22-1 to 22-4 (four complex filters), and addition units 23-1 to 23-2.

The adaptive equalization unit 118 restores signal components distributed with frequency characteristics to the lanes of the digital electric signals of "$x_i$", "$x_q$", "$y_i$", and "$y_q$" due to polarization rotation and polarization mode dispersion, by using the FIR filters 22-1 to 22-4. Hereinafter, the matters common to the coefficient update units 20-1 to 20-2 will be referred to as "coefficient update unit 20" with part of the reference numeral omitted. The matters common to the FIR filters 22-1 to 22-4 will be referred to as "FIR filter 22" with part of reference numeral omitted. The matters common to the addition units 23-1 to 23-2 will be referred to as "addition unit 23" with part of the reference numeral omitted.

The coefficient update unit 20 derives a tap coefficient to be applied to the FIR filter 22. The coefficient update unit 20-1 acquires, from the wavelength dispersion compensation unit 117, the digital signals corresponding to the X polarization of the optical signal whose wavelength dispersion is compensated, and the digital signals corresponding to the Y polarization of the optical signal whose wavelength dispersion is compensated. The coefficient update unit 20-1 derives a tap coefficient of each tap included in the FIR filter 22-1 and a tap coefficient of each tap included in the FIR filter 22-2.

The coefficient update unit 20-2 acquires, from the wavelength dispersion compensation unit 117, the digital signals corresponding to the X polarization of the optical signal whose wavelength dispersion is compensated, and the digital signals corresponding to the Y polarization of the optical signal whose wavelength dispersion is compensated. The coefficient update unit 20-2 derives a tap coefficient of each tap included in the FIR filter 22-3 and a tap coefficient of each tap included in the FIR filter 22-4. Note that, in a case where the amount of wavelength dispersion received through the optical transmission line is small, equalization can be collectively performed by an adaptive equalization filter.

The FIR filter 22 is configured using a finite impulse response filter (FIR filter). A tap coefficient is set to each tap of the FIR filter 22 on the basis of the tap coefficient output from the coefficient update unit 20. The FIR filter 22 is configured using the finite impulse response filter in which a sampling frequency of an input signal input from the outside is at a ratio of one sample or more per symbol, and a sampling frequency of an output signal is one sample per symbol. In a case where the sampling frequency of the input signal is at a ratio of less than two samples per symbol or in a case where the sampling frequency of the input signal is at a ratio which is not an integer sample per symbol, the FIR filter 22 classifies symbols into any of a plurality of sequences according to the positional relationship of the sampling point of the input signal with respect to the output signal, and obtains an output signal by applying different filter coefficients for each sequence.

In order to obtain an output corresponding to the transmission-side X polarization, the FIR filter 22-1 performs a convolution operation or an inner product operation with a filter coefficient $h_{xx}$ on a digital electric signal "$x_a$" corresponding to the X polarization input to the adaptive equalization unit 118, and outputs the result to the addition unit 23-1. Here, in a case where the adaptive equalization unit 118 includes a complex filter, $x_a$ is $X_i+j*X_q$ (j: imaginary number unit).

In order to obtain the output corresponding to the transmission-side X polarization, the FIR filter 22-2 performs a convolution operation or an inner product operation with a filter coefficient $h_{xy}$ on a digital electric signal "$y_a$" corresponding to the Y polarization input to the adaptive equalization unit 118, and outputs the result to the addition unit 23-1. Here, in a case where the adaptive equalization unit 118 includes a complex filter, $y_a$ is $Y_i+j*Y_q$.

In order to obtain an output corresponding to the transmission-side Y polarization, the FIR filter 22-3 performs a convolution operation or an inner product operation with a filter coefficient $h_{yy}$ on a digital electric signal "$y_a$" corresponding to the Y polarization input to the adaptive equalization unit 118, and outputs the result to the addition unit 23-2.

In order to obtain the output corresponding to the transmission-side Y polarization, the FIR filter 22-4 performs a convolution operation or an inner product operation with a filter coefficient $h_{yx}$ on a digital electric signal "$x_a$" corresponding to the X polarization input to the adaptive equalization unit 118, and outputs the result to the addition unit 23-2.

The addition unit 23-1 outputs the addition result of the output from the FIR filter 22-1 and the output from the FIR filter 22-2 to the decoding unit 120 as the estimation result of the digital electric signal corresponding to the transmission-side X polarization.

The addition unit 23-2 outputs the addition result of the output from the FIR filter 22-3 and the output from the FIR filter 22-4 to the decoding unit 120 as the estimation result of the digital electric signal corresponding to the transmission-side Y polarization.

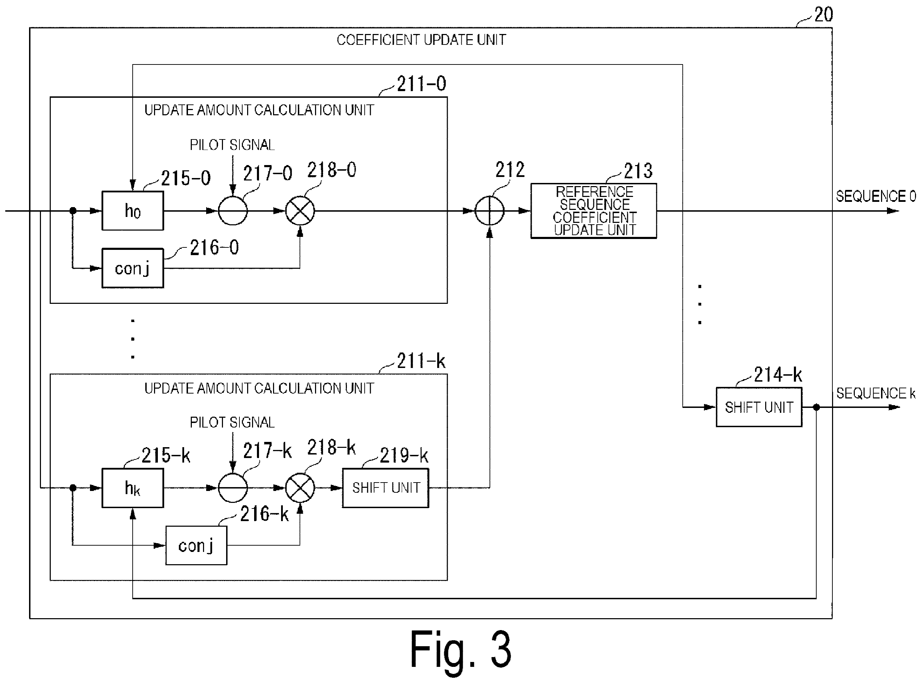

Fig. 3 is a diagram illustrating a configuration example of the coefficient update unit 20 according to the first embodiment. The coefficient update unit 20 includes update amount calculation units 211-0 to 211-k, an addition unit 212, a reference sequence coefficient update unit 213, and a shift unit 214-k. Here, "k" is an integer of one or more.

The update amount calculation units 211-0 to 211-k calculate the update amounts of the tap coefficients in the sequence classified for each symbol by using the input signal. The sequence classified for each symbol includes a sequence as a reference (hereinafter, referred to as a "reference sequence") and a k-th sequence other than the reference sequence. The update amount calculation unit 211-0 receives a signal corresponding to a sequence 0, which is the reference sequence, as an input, and calculates the update amounts of the tap coefficients in the sequence 0 that is the reference sequence. The update amount calculation unit 211-0 is an aspect of a first update amount calculation unit.

The update amount calculation unit 211-k receives a signal corresponding to a sequence k as an input, and calculates the update amounts of the tap coefficients in the sequence k. The update amount calculation units 211-0 to 211-k output the calculated update amounts of the tap coefficients to the addition unit 212. The update amount calculation unit 211-k is an aspect of a second update amount calculation unit.

The addition unit 212 adds the update amounts of a plurality of tap coefficients output from the update amount calculation units 211-0 to 211-k, respectively. The addition unit 212 outputs the addition result to the reference sequence coefficient update unit 213. Note that before the addition by the addition unit 212, a shift operation is performed on an update amount vector in the sequence (for example, the sequence k) other than the reference sequence.

The reference sequence coefficient update unit 213 receives the addition result output from the addition unit 212 as an input. The reference sequence coefficient update unit 213 calculates the tap coefficients of the sequence 0, which is the reference sequence, by using the input addition result. Specifically, the reference sequence coefficient update unit 213 calculates a tap coefficient $h_0$ of the sequence 0, which is the reference sequence, on the basis of Equation (1) below.
[Math. 1]

$$h_0 = h_0 + \mu \sum_k \sigma_k^T (r - X_k^T \sigma_k h_0) X_k^* \qquad \cdots (1)$$

In Equation (1), $\mu$ represents a step size, $X_k$ represents an input signal vector of the sequence k, $X_k^*$ represents a complex conjugate of the input signal vector of the sequence k, $h_k$ represents a tap coefficient of the sequence k, $\sigma_k$ represents a shift matrix (square matrix) in the sequence k, $\sigma_k^T$ represents a transposed matrix obtained by transposing the shift matrix in the sequence k, and r represents a known symbol signal such as a pilot signal. Since the step size $\mu$ depends on the magnitude of the input signal, a value smaller than the maximum value of the eigenvalue of the covariance matrix of the input signal is desirable. Note that $\sigma_k^T$ is calculated by a shift unit 219-k. The coefficient update equation of the sequence 0 which is the reference sequence as in Equation (1) above is expressed using the gradient of the square error. That is, the reference sequence coefficient update unit 213 calculates an update vector in a normal LMS update equation, and updates the coefficients of the sequence 0, which is the reference sequence, by multiplying the calculated update vector by a transposed matrix obtained by transposing the shift matrix.

The reference sequence coefficient update unit 213 outputs the tap coefficients of the sequence 0, which is the reference sequence updated as described above, to the update amount calculation unit 211-0, the FIR filter 22, and the shift unit 214-k. In this manner, the tap coefficients of the sequence 0, which is the reference sequence updated by the reference sequence coefficient update unit 213, are set in the update amount calculation unit 211-0 and used for calculation of the update amount.

The shift unit 214-k calculates the tap coefficients of the sequence k by using the tap coefficients of the sequence 0 that is the input reference sequence. Specifically, the shift unit 214-k calculates the tap coefficients of the sequence k by multiplying the tap coefficients of the sequence 0, which is the input reference sequence, by a shift matrix calculated in advance. The shift matrix is generally different for each sequence. The shift unit 214-k outputs the calculated tap coefficients of the sequence k to the update amount calculation unit 211-k and the FIR filter 22. The shift unit 214-k is an aspect of a first shift unit.

As described above, the coefficient update unit 20 calculates the tap coefficients of the sequence k other than the reference sequence by using the tap coefficients of the sequence 0 which is the reference sequence. For example, in a case where it is classified into a sequence 0, a sequence 1, and a sequence 2, the sequence 0 is a reference sequence, and the sequence 1 and the sequence 2 are sequences other than the reference sequence. Therefore, the coefficient update unit 20 calculates the tap coefficients of the sequence 1 and the sequence 2 other than the reference sequence by using the tap coefficients of the sequence 0 which is the reference sequence. At this time, the coefficient update unit 20 calculates the tap coefficients of the sequence 1 by multiplying the tap coefficients of the sequence 0, which is the input reference sequence, by a shift matrix corresponding to the sequence 1 calculated in advance. Similarly, the coefficient update unit 20 calculates the tap coefficients of the sequence 2 by multiplying the tap coefficients of the sequence 0, which is the input reference sequence, by a shift matrix corresponding to the sequence 2 calculated in advance. Furthermore, before the addition by the addition unit 212, a shift operation is performed on the update amount vector other than the reference sequence. In this shift operation, the transposed matrix of the shift matrix used when a sequence coefficient k is calculated from the reference sequence is applied.

The shift matrix is a fixed matrix calculated in advance using a least-squares method. The tap coefficients of the shift sequence are obtained so as to approach the waveform obtained by convolving the tap coefficients of the sequence 0 which is the reference sequence. As a result, a certain shift matrix is obtained and the shift matrix has a form that acts on the tap coefficients of the reference system. The shift matrix (N×N) depends on the number of taps (N) and can be independent of the tap shape.

Next, a method for obtaining a shift matrix different for each sequence will be described. Here, a device for obtaining a shift matrix different for each sequence will be described as a shift matrix calculation device. As an example, a method for obtaining a shift matrix corresponding to the sequence 1 will be described. First, an input signal for generation with a signal frequency bandwidth equal to or greater than the signal input to the FIR filter 22 is prepared. The input signal for generation is input to the shift matrix calculation device. The shift matrix calculation device generates an inverse shift waveform by phase-shifting the input signal for generation in the opposite direction by a phase difference between sampling points of a sequence 1 for which a shift matrix is to be generated and a sequence 0 which is a reference sequence. Next, the shift matrix calculation device generates an inverse matrix of the covariance matrix of the inverse shift waveform. Next, the shift matrix calculation device generates a correlation matrix between the inverse shift waveform and the input signal for generation. Then, the shift matrix calculation device calculates the shift matrix corresponding to the sequence 1 by multiplying the inverse matrix of the generated covariance matrix by the correlation matrix. Here, the calculation may be performed in consideration of regularization or the like. In this case, the shift matrix calculation device calculates the FIR coefficient (filter coefficient) to be convolved with the inverse shift waveform so as to minimize an error with a waveform obtained by convolving the FIR coefficient (filter coefficient) of the reference sequence with the input signal waveform for generation or the inner product waveform. Note that the same applies to the method for obtaining the shift matrix corresponding to the sequence 2. By such a method, it is possible to obtain the shift matrices of all the sequences k in the shift matrix calculation device. The shift matrices of all the sequences k calculated by the shift matrix calculation device are stored in the coefficient update unit 20.

Note that the shift matrix calculation device may obtain the shift matrix by the following method. The shift matrix calculation device generates a waveform obtained by phase-shifting the input signal for generation in the forward direction. Next, the shift matrix calculation device generates an inverse matrix of the covariance matrix of the input signal for generation. Next, the shift matrix calculation device generates a correlation matrix between the waveform phase-shifted in the forward direction and the input signal for generation. Then, the shift matrix calculation device calculates the shift matrix corresponding to the sequence 1 by multiplying the inverse matrix of the generated covariance matrix by the correlation matrix. Note that the same applies to the method for obtaining the shift matrix corresponding to the sequence 2. The shift matrices of all the sequences k calculated by the shift matrix calculation device are stored in the coefficient update unit 20.

Referring back to Fig. 3, the description will be continued.

The update amount calculation unit 211-0 includes a coefficient multiplication unit 215-0, a complex conjugate unit 216-0, a subtraction unit 217-0, and a multiplication unit 218-0. The coefficient multiplication unit 215-0 performs a convolution operation or an inner product operation between the signal corresponding to the sequence 0 which is the input reference sequence and the tap coefficient $h_0$ in the sequence 0 which is the reference sequence. The coefficient multiplication unit 215-0 is an aspect of a first coefficient multiplication unit.

The complex conjugate unit 216-0 calculates the complex conjugate of the input signal of the reference sequence by taking the complex conjugate of the signal corresponding to the sequence 0 which is the input reference sequence. The complex conjugate unit 216-0 outputs the calculated complex conjugate of the input signal of the reference sequence to the multiplication unit 218-0. The complex conjugate unit 216-0 is an aspect of a first complex conjugate unit.

The output of the coefficient multiplication unit 215-0 and the pilot signal which is a known signal are input to the subtraction unit 217-0. The pilot signal input to the subtraction unit 217-0 is a pilot signal corresponding to the sequence 0. The subtraction unit 217-0 calculates an error between the output of the coefficient multiplication unit 215-0 that has been input and the pilot signal corresponding to the sequence 0. The subtraction unit 217-0 outputs the calculated error to the multiplication unit 218-0.

The output (error) of the subtraction unit 217-0 and the output (complex conjugate of the input signal of the reference sequence) of the complex conjugate unit 216-0 are input to the multiplication unit 218-0. The multiplication unit 218-0 multiplies the input error by the complex conjugate of the input signal of the reference sequence. Thus, the multiplication unit 218-0 calculates the gradient vector of the reference sequence. The multiplication unit 218-0 is an aspect of a first multiplication unit.

The update amount calculation unit 211-k includes a coefficient multiplication unit 215-k, a complex conjugate unit 216-k, a subtraction unit 217-k, a multiplication unit 218-k, and a shift unit 219-k. The update amount calculation unit 211-k is different from the update amount calculation unit 211-0 in that the shift unit 219-k is provided.

The coefficient multiplication unit 215-k performs a convolution operation or an inner product operation between the signal corresponding to the input sequence k and the tap coefficient $h_k$ in the sequence k. The coefficient multiplication unit 215-k is an aspect of a second coefficient multiplication unit. The complex conjugate unit 216-k calculates the complex conjugate of the input signal of the sequence k by taking the complex conjugate of the signal corresponding to the input sequence k. The complex conjugate unit 216-k outputs the calculated complex conjugate of the input signal of the sequence k to the multiplication unit 218-k. The complex conjugate unit 216-k is an aspect of a second complex conjugate unit.

The output of the coefficient multiplication unit 215-k and the pilot signal which is a known signal are input to the subtraction unit 217-k. The pilot signal input to the subtraction unit 217-k is a pilot signal corresponding to the sequence k. In this manner, the pilot signal is also classified for each sequence according to the phase relationship. That is, the pilot signal is different for each sequence. The subtraction unit 217-k calculates an error between the output of the coefficient multiplication unit 215-k that has been input and the pilot signal corresponding to the sequence k. The subtraction unit 217-k outputs the calculated error to the multiplication unit 218-k.

The output (error) of the subtraction unit 217-k and the output (complex conjugate of the input signal of the sequence k) of the complex conjugate unit 216-k are input to the multiplication unit 218-k. The multiplication unit 218-k multiplies the input error by the complex conjugate of the input signal of the sequence k. The multiplication unit 218-k outputs the multiplication result to the shift unit 219-k. Thus, the multiplication unit 218-k calculates the gradient vector of a sequence other than the reference sequence. The multiplication unit 218-k is an aspect of a second multiplication unit.

The shift unit 219-k multiplies the input multiplication result by the transposed matrix obtained by transposing the shift matrix corresponding to the sequence k calculated in advance. In this manner, the shift unit 219-k performs a shift operation on the update amount vector of the sequence other than the reference sequence. Through this processing, the update amount calculation unit 211-k calculates the update amounts of the tap coefficients in the sequence k. The shift unit

**EP 4 693 954 A1**

219-k outputs the update amounts of the tap coefficients in the sequence k to the addition unit 212. The shift unit 219-k is an aspect of a second shift unit.

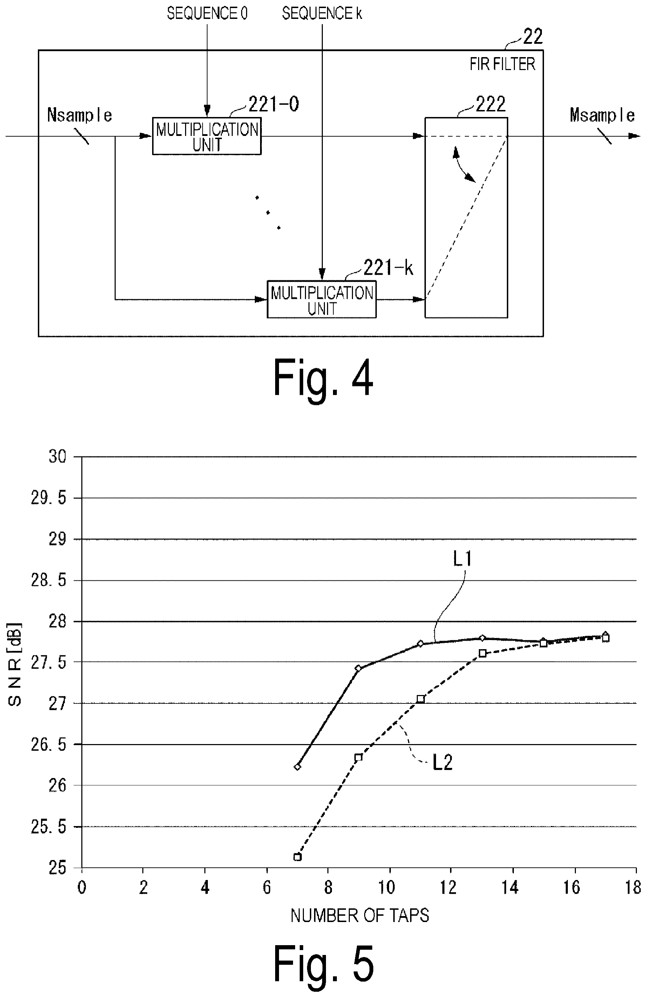

Fig. 4 is a diagram illustrating a configuration example of the FIR filter 22 according to the first embodiment. The FIR filter 22 includes multiplication units 221-0 to 221-k and a switching unit 222. The multiplication unit 221 performs complex multiplication of the input signal with the tap coefficients. The tap coefficients corresponding to the sequence 0 calculated by the coefficient update unit 20 are set in the multiplication unit 221-0. The tap coefficients corresponding to the sequence k calculated by the coefficient update unit 20 are set in the multiplication unit 221-k.

The switching unit 222 switches the signal output from the FIR filter 22. For example, the switching unit 222 connects the output path of the multiplication unit 221-0 and the output path of the FIR filter 22, and outputs a signal complex-multiplied by the tap coefficients corresponding to the sequence 0. For example, the switching unit 222 connects the output path of the multiplication unit 221-k and the output path of the FIR filter 22, and outputs a signal complex-multiplied by the tap coefficients corresponding to the sequence k. Since the coefficient sequences are assigned according to the positional relationship of the sampling points of the input signal with respect to the output signal, the switching unit 222 performs switching according to a predetermined rule so as to obtain suitable coefficient sequences. At this time, the switching unit 222 switches the connection of the sequence 0 and the sequence k according to the rule.

Fig. 5 is a diagram for describing the effects of the present invention.

In Fig. 5, the horizontal axis represents the number of taps, and the vertical axis represents a signal-to-noise ratio (SNR). A line segment L1 illustrated in Fig. 5 represents a result obtained by the method of the present invention, and a line segment L2 represents a result obtained by the conventional method of the present invention. As is clear from Fig. 5, the method of the present invention has an improvement effect in SNR as compared with the conventional method. Moreover, it can be seen that the number of taps for obtaining the same SNR can be reduced as compared with the conventional method. Power consumption can be reduced by reducing the number of taps.

In the optical transmission/reception device 10 configured as described above, in a case where the sampling frequency of the input signal input from the outside is at a ratio of less than two samples per symbol or in a case where the sampling frequency of the input signal is at a ratio which is not the integer sample per symbol, there are provided the FIR filters 22-1 to 22-k in which the sampling frequency of the output signal is one sample per symbol, and that classify each symbol into any of a plurality of sequences according to the positional relationship of the sampling points of the input signal with respect to the output signal, and execute adaptive equalization processing on the digital signal corresponding to the optical signal received via the optical transmission line on the basis of the filter coefficients different for each sequence; and the coefficient update unit 20 that updates the filter coefficients of the reference sequence by using the gradient vector obtained from the known signal to set the updated filter coefficients in the FIR filter 22-1, and generates filter coefficients of a sequence other than the reference sequence by performing an operation on the shift matrix different for each sequence for the filter coefficients of the reference sequence to set the generated filter coefficients in the FIR filter 22-k.

Thus, even in a case where the sampling frequency is low with respect to the modulation rate, it is possible to accurately compensate for the intermode interference and the intersymbol interference with a short FIR filter length. Therefore, not only the power consumption can be suppressed, but also the known signal can be most effectively used to perform the high-speed FIR filter control even for the time variation caused in the transmission line, such as the polarization variation.

(Second embodiment)

In the first embodiment, the tap coefficients of each sequence are used in the calculation of the update amount of each sequence, but in a second embodiment, a configuration in which the tap coefficients of the reference sequence are used in the calculation of the update amount of each sequence will be described.

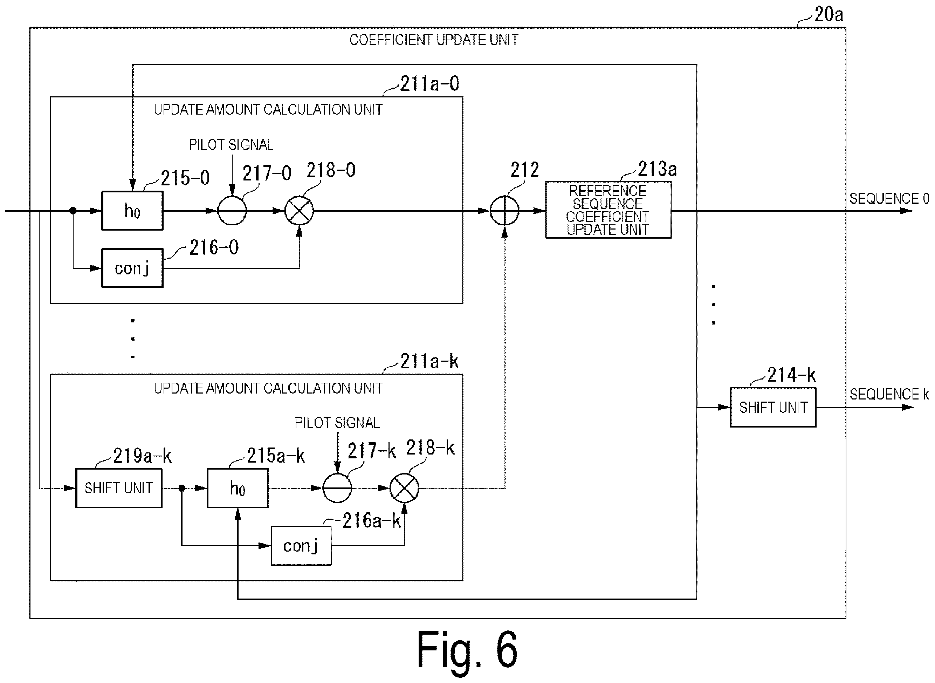

Fig. 6 is a diagram illustrating a configuration example of a coefficient update unit 20a according to the second embodiment. The coefficient update unit 20a includes update amount calculation units 211a-0 to 211a-k, an addition unit 212, a reference sequence coefficient update unit 213a, and a shift unit 214-k. The coefficient update unit 20a is different from the coefficient update unit 20 in that the update amount calculation units 211a-0 to 211a-k and the reference sequence coefficient update unit 213a are provided instead of the update amount calculation units 211-0 to 211-k and the reference sequence coefficient update unit 213. The other configurations of the coefficient update unit 20a are similar to those of the coefficient update unit 20. Hereinafter, the difference from the coefficient update unit 20 will be mainly described.

The update amount calculation unit 211a-0 performs processing similar to that of the update amount calculation unit 211-0. The update amount calculation unit 211a-k receives a signal corresponding to the sequence k as an input, and calculates the update amounts of the tap coefficients in the sequence 0. The update amount calculation unit 211a-k includes a coefficient multiplication unit 215a-k, a complex conjugate unit 216a-k, a subtraction unit 217-k, a multiplication unit 218-k, and a shift unit 219a-k. The update amount calculation unit 211a-k includes a shift unit 219a-k at a front stage of the coefficient multiplication unit 215a-k.

The shift unit 219a-k multiplies the input signal sequence corresponding to the sequence k by a matrix obtained

8

by transposing the shift matrix corresponding to the sequence k calculated in advance. The shift unit 219-k outputs the multiplication result to the coefficient multiplication unit 215a-k and the complex conjugate unit 216-k.

The coefficient multiplication unit 215a-k performs a convolution operation or an inner product operation between the input multiplication result and the tap coefficient $h_0$ in the sequence 0. The complex conjugate unit 216a-k takes a complex conjugate of the input multiplication result.

The output of the coefficient multiplication unit 215a-k and the pilot signal corresponding to the sequence k are input to the subtraction unit 217-k. The subtraction unit 217-k calculates an error between the output of the coefficient multiplication unit 215a-k that has been input and the pilot signal corresponding to the sequence k. The subtraction unit 217-k outputs the calculated error to the multiplication unit 218-k.

The output (error) of the subtraction unit 217-k and the output of the complex conjugate unit 216a-k are input to the multiplication unit 218-k. The multiplication unit 218-k multiplies the input error by the multiplication result. The multiplication unit 218-k outputs the multiplication result to the addition unit 212.

In the optical transmission/reception device 10 according to the second embodiment configured as described above, the effects similar to those of the first embodiment can be obtained.

In the optical transmission/reception device 10 according to the second embodiment, each update amount calculation unit 211a uses the same tap coefficients (for example, the tap coefficients of the sequence 0 which is the reference sequence) in the calculation of the update amount. Thus, it is not necessary to perform processing by the shift unit 214-k in the feedback of the tap coefficients to the update amount calculation unit 211a-k. Therefore, the delay can be reduced as compared with the first embodiment.

(First modification example common to first embodiment and second embodiment)

In generation of the shift matrix, a signal obtained by converting any one of the following signals or a signal obtained by combining the following signals into a digital signal may be used as the input signal for generation. The signal obtained by combining the following signals may be any combination, and is only required to be a combination of two or more of the following signals.

- · A signal obtained by convolving an impulse signal with a root raised cosine (RRC) waveform
- · A signal of a sequence obtained by upsampling a random signal sequence using an RRC waveform
- · A signal having a band that is more extended as compared to a signal that is originally handled
- · A plurality of signals of a signal sequence obtained by shifting a phase by one sample
- · A plurality of signals of a signal sequence obtained by shifting a phase by fractional samples
- · A signal obtained by rotating a phase by 90 degrees
- · A signal to which noise is added

(Second modification example common to first embodiment and second embodiment)

In each satisfied embodiment, the configuration in which the update amount calculation units 211 and 211a calculate the gradient vector on the basis of the pilot signal that is the known signal has been described. On the other hand, the update amount calculation units 211 and 211a may be configured to calculate the gradient vector by using a determination value obtained by temporarily determining a data signal as a substitute for the known signal. In the calculation method of the gradient vector in a case of being configured as described above, the pilot signal is only required to be replaced with the determination value obtained by temporarily determining the data signal.

Some functions of the optical transmission/reception device 10 in the embodiments described above may be implemented by a computer. In that case, a program for implementing this function may be recorded in a computer-readable recording medium, and the program recorded in the recording medium may be read and executed by a computer system to implement this function. Note that the "computer system" herein includes hardware such as an operating system (OS) and peripheral devices.

Furthermore, the "computer-readable recording medium" refers to a portable medium such as a flexible disk, a magneto-optical disk, a read only memory (ROM), or a compact disk read only memory (CD-ROM), and a storage device such as a hard disk included in the computer system. Moreover, the "computer-readable recording medium" may include a medium that dynamically holds the program for a short period of time, such as a communication line in a case where the program is transmitted via a network such as the Internet or a communication line such as a telephone line, and a medium that holds the program for a certain period of time, such as a volatile memory inside the computer system serving as a server or a client in that case. Furthermore, the above-described program may be for implementing some of the functions described above, may be one that can implement the functions described above in a combination with the program already recorded in the computer system, or may be one implemented by using a programmable logic device such as a field programmable gate array (FPGA).

Although the embodiments of the present invention have been described in detail with reference to the drawings, specific configurations are not limited to the embodiments and include design and the like within the gist of the present invention.

Industrial Applicability

The present invention can be applied to adaptive equalization processing on a reception side in digital coherent optical transmission.

Reference Signs List

10 Optical transmission/reception device
11 Digital signal processing unit
12 Optical transmission unit
13 Optical reception unit
20, 20-1, 20-2 Coefficient update unit
22, 22-1, 22-2, 22-3, 22-4 FIR filter
23, 23-1, 23-2 Addition unit
111 Transmission processing unit
112 Encoding unit
113 Mapping unit
114 Transmission waveform equalization unit
115 DAC
116 ADC
117 Wavelength dispersion compensation unit
118 Adaptive equalization unit
119 Demapping unit
120 Decoding unit
211-0, 211a-0, 211-k, 211a-k Update amount calculation unit
212 Addition unit
213, 213aReference sequence coefficient update unit
214-k Shift unit
215-0, 215-k, 215a-k Coefficient multiplication unit
216-0, 216-k, 216a-k Complex conjugate unit
217-0, 217-k Subtraction unit
218-0, 218-k Multiplication unit
219-k, 219a-k Shift unit
221-0, 221-k Multiplication unit
222 Switching unit

**Claims**

1. A signal processing device comprising:

   a finite impulse response (FIR) filter in which a sampling frequency of an input signal input from an outside is at a ratio of less than two samples per symbol or at a ratio which is not capable of being represented by an integer, and the sampling frequency of an output signal is one sample per symbol, the FIR filter classifying each symbol into any of a plurality of sequences according to a positional relationship of sampling points of the input signal with respect to the output signal, and executing adaptive equalization processing on a digital signal corresponding to an optical signal received via an optical transmission line on a basis of filter coefficients different for each sequence; and
   a coefficient update unit configured to update the filter coefficients of a reference sequence by using a gradient vector obtained from a known signal or a data signal to set the updated filter coefficients in the FIR filter, and generates filter coefficients of a sequence other than the reference sequence by performing an operation on a square matrix different for each sequence for the filter coefficients of the reference sequence to set the generated filter coefficients in the FIR filter.

2. The signal processing device according to claim 1,

wherein the coefficient update unit includes
a first update amount calculation unit configured to calculate update amounts of the filter coefficients of the reference sequence,
a second update amount calculation unit configured to calculate update amounts of the filter coefficients of a sequence other than the reference sequence,
a reference sequence coefficient update unit configured to update the filter coefficients of the reference sequence on a basis of the update amounts of the filter coefficients of the reference sequence and the update amounts of the filter coefficients of the sequence other than the reference sequence, and
a first shift unit that generates filter coefficients of a sequence other than the reference sequence by performing an operation on the square matrix for the filter coefficients of the reference sequence updated by the reference sequence coefficient update unit.

3. The signal processing device according to claim 2, further comprising an addition unit configured to add a calculation result of the first update amount calculation unit and a calculation result of the second update amount calculation unit,

wherein the first update amount calculation unit includes
a first coefficient multiplication unit configured to perform a convolution operation or an inner product operation between the input signal of the reference sequence and the filter coefficients of the reference sequence,
a first complex conjugate unit configured to calculate a complex conjugate of the input signal of the reference sequence by taking the complex conjugate of the input signal of the reference sequence,
a first subtraction unit configured to calculate an error between an operation result of the first coefficient multiplication unit and a determination value based on the known signal or the data signal corresponding to the reference sequence, and
a first multiplication unit configured to calculate a first gradient vector by multiplying the complex conjugate of the input signal of the reference sequence calculated by the first complex conjugate unit by an operation result of the first subtraction unit,
the second update amount calculation unit includes
a second coefficient multiplication unit configured to perform a convolution operation or an inner product operation between an input signal of a sequence other than the reference sequence and filter coefficients of a sequence other than the reference sequence,
a second complex conjugate unit configured to calculate a complex conjugate of an input signal of a sequence other than the reference sequence by taking a complex conjugate of the input signal of the sequence other than the reference sequence,
a second subtraction unit configured to calculate an error between an operation result of the second coefficient multiplication unit and a determination value based on the known signal or the data signal corresponding to a sequence other than the reference sequence,
a second multiplication unit configured to calculate a second gradient vector by multiplying the complex conjugate of the input signal of the sequence other than the reference sequence calculated by the second complex conjugate unit by an operation result of the second subtraction unit, and
a second shift unit configured to multiply the second gradient vector by a transposed matrix obtained by transposing the square matrix, and
the addition unit adds the first gradient vector calculated by the first multiplication unit and a multiplication result by the second shift unit and outputs the result to the reference sequence coefficient update unit.

4. The signal processing device according to claim 2, further comprising an addition unit configured to add a calculation result of the first update amount calculation unit and a calculation result of the second update amount calculation unit,

wherein the first update amount calculation unit includes
a first coefficient multiplication unit configured to perform a convolution operation or an inner product operation between the input signal of the reference sequence and the filter coefficients of the reference sequence,
a first complex conjugate unit configured to calculate a complex conjugate of the input signal of the reference sequence by taking the complex conjugate of the input signal of the reference sequence,
a first subtraction unit configured to calculate an error between an operation result of the first coefficient multiplication unit and a determination value based on the known signal or the data signal corresponding to the reference sequence, and

a first multiplication unit configured to calculate a first gradient vector by multiplying the complex conjugate of the input signal of the reference sequence calculated by the first complex conjugate unit by an operation result of the first subtraction unit,

the second update amount calculation unit includes

a second shift unit configured to multiply an input signal of a sequence other than the reference sequence by a transposed matrix obtained by transposing the square matrix,

a second coefficient multiplication unit configured to perform a convolution operation or an inner product operation between a multiplication result obtained by the second shift unit and the filter coefficients of the reference sequence,

a second complex conjugate unit configured to calculate a complex conjugate of an input signal of a sequence other than the reference sequence by taking a complex conjugate of the multiplication result obtained by the second shift unit,

a second subtraction unit configured to calculate an error between an operation result of the second coefficient multiplication unit and a determination value based on the known signal or the data signal corresponding to a sequence other than the reference sequence, and

a second multiplication unit configured to calculate a second gradient vector by multiplying the complex conjugate of the input signal of the sequence other than the reference sequence calculated by the second complex conjugate unit by an operation result of the second subtraction unit, and

the addition unit adds the first gradient vector calculated by the first multiplication unit and the second gradient vector calculated by the second multiplication unit, and outputs the result to the reference sequence coefficient update unit.

5. The signal processing device according to any one of claims 1 to 4,

   wherein the square matrix different for each sequence used by the coefficient update unit is generated by applying a correlation matrix between an inverse shift waveform and an input signal for generation to an inverse matrix of a covariance matrix of the inverse shift waveform generated by phase-shifting an input signal for generation having a signal frequency bandwidth equal to or greater than that of a signal input to the FIR filter in an opposite direction by a phase difference of sampling points of a sequence other than the reference sequence for which the square matrix is to be generated and the reference sequence.

6. The signal processing device according to claim 5,

   wherein the input signal for generation is

   any one of a signal obtained by convolving an impulse signal with a root raised cosine (RRC), a signal of a sequence obtained by upsampling a random signal sequence using an RRC waveform, a signal having a band that is more extended as compared to a signal originally handled, a plurality of signals of a signal sequence obtained by shifting a phase by one sample, a plurality of signals of a signal sequence obtained by shifting a phase by fractional samples, a signal obtained by rotating a phase by 90 degrees, and a signal obtained by adding noise to these signals, or a signal obtained by combining these signals.

7. A signal processing method executed by a signal processing device, the method comprising:

   by a finite impulse response (FIR) filter in which a sampling frequency of an input signal input from an outside is at a ratio of less than two samples per symbol or at a ratio which is not capable of being represented by an integer, and the sampling frequency of an output signal is one sample per symbol, classifying each symbol into any of a plurality of sequences according to a positional relationship of sampling points of the input signal with respect to the output signal, and executing adaptive equalization processing on a digital signal corresponding to an optical signal received via an optical transmission line on a basis of filter coefficients different for each sequence; and updating the filter coefficients of a reference sequence by using a gradient vector obtained from a known signal or a data signal to set the updated filter coefficients in the FIR filter, and generating filter coefficients of a sequence other than the reference sequence by performing an operation on a square matrix different for each sequence for the filter coefficients of the reference sequence to set the generated filter coefficients in the FIR filter.

Fig. 1

Fig. 2

Fig. 3

SEQUENCE 0    SEQUENCE k

Fig. 4

NUMBER OF TAPS

Fig. 5

Fig. 6

## INTERNATIONAL SEARCH REPORT

| International application No. |
| --- |
| **PCT/JP2023/012815** |

**A. CLASSIFICATION OF SUBJECT MATTER**

$\textbf{\textit{H04B 10/61}}$(2013.01)i

FI:    H04B10/61

According to International Patent Classification (IPC) or to both national classification and IPC

**B. FIELDS SEARCHED**

Minimum documentation searched (classification system followed by classification symbols)

H04B10/61

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2020-136834 A (FUJITSU LIMITED) 31 August 2020 (2020-08-31) <br> paragraphs [0025]-[0089], fig. 5-10 | 1-7 |
| A | JP 2018-530974 A (MITSUBISHI ELECTRIC CORPORATION) 18 October 2018 (2018-10-18) <br> paragraphs [0047], [0048] | 1-7 |
| A | JP 2009-296596 A (FUJITSU LIMITED) 17 December 2009 (2009-12-17) <br> paragraph [0029], fig. 2A | 1-7 |
| A | SAVORY, S. J., Digital filters for coherent optical receivers, OPTICS EXPRESS, January 2008, vol. 16, no. 2, pp. 804-817 <br> "5.2 Update algorithm for the adaptive equalizer" | 1-7 |
| A | HAMAOKA, F. et al., Experimental Demonstration of Simplified Adaptive Equalizer for Fractionally Sampled 120-GBaud Signal, 2017 European Conference on Optical Communication (ECOC), September 2017 <br> entire text, all drawings | 1-7 |

☐ Further documents are listed in the continuation of Box C.          ☑ See patent family annex.

| | |
| --- | --- |
| *    Special categories of cited documents: <br> "A"   document defining the general state of the art which is not considered to be of particular relevance <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search | Date of mailing of the international search report |
| --- | --- |
| **01 June 2023** | **20 June 2023** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

## INTERNATIONAL SEARCH REPORT
### Information on patent family members

International application No.

**PCT/JP2023/012815**

| Patent document cited in search report | | | Publication date (day/month/year) | Patent family member(s) | | | Publication date (day/month/year) |
|---|---|---|---|---|---|---|---|
| JP | 2020-136834 | A | 31 August 2020 | US | 2020/0267030 | A1 | |
| | | | | paragraphs [0055]-[0114], fig. 5-10 | | | |
| JP | 2018-530974 | A | 18 October 2018 | US | 2017/0264468 | A1 | |
| | | | | paragraphs [0063], [0064] | | | |
| | | | | WO | 2017/159414 | A1 | |
| | | | | CN | 108702221 | A | |
| JP | 2009-296596 | A | 17 December 2009 | US | 2010/0003028 | A1 | |
| | | | | paragraphs [0059], [0060], fig. 2A | | | |
| | | | | CN | 101599801 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021053706 A